# FASCICULE DE BREVET EUROPEEN

(11) **EP 1 171 400 B1**
(45) Date de publication et mention de la délivrance du brevet: **23.01.2008**
(21) Numéro de dépôt: 00918951.5
(22) Date de dépôt: 12.04.2000
(51) Int. Cl.: C04B 26/26, C04B 14/42, E01C 7/26

(54) **MATERIAU FIBREUX DE RENFORCEMENT POUR CONGLOMERATS BITUMEUX, PROCEDE DE REALISATION ET UTILISATION**
VERSTÄRKUNGSFASERMATERIAL FÜR BITUMINÖSE KONGLOMERATE, VERFAHREN ZUR HERSTELLUNG UND VERWENDUNG
REINFORCING FIBRE MATERIAL FOR BITUMINOUS AGGREGATES, METHOD FOR PRODUCING SAME AND USE

(30) Priorité: 14.04.1999 IT MI990767
(43) Date de publication de la demande: 16.01.2002
(73) Titulaire: Saint-Gobain Vetrotex France S.A., 73000 Chambéry (FR)
(72) Inventeur: ROSSI, Francesco, I-17028 Spotorno (IT); FERRANTE, Antonio, I-20145 Milano (IT)
(74) Mandataire: Cardin, Elise
(86) Numéro de dépôt international: PCT/FR2000/000937
(87) Numéro de publication internationale: WO 2000/061516

(56) Documents cités:
- EP-A- 0 333 299
- EP-A- 0 462 298
- EP-A- 0 690 173
- FR-A- 1 483 687
- FR-A- 2 718 766
- CHEMICAL ABSTRACTS, vol. 106, no. 22, 1 juin 1987 (1987-06-01) Columbus, Ohio, US; abstract no. 181401g, S. TOYOSHIMA, ET AL.: page 322; XP000373918 & JP 62 041399 A (ID.) 23 février 1987 (1987-02-23)

## Description

La présente invention a pour objet un matériau fibreux de renforcement pour conglomérats bitumineux utilisés pour les revêtements routiers ainsi qu'un procédé pour la réalisation dudit matériau.

Comme on le sait, les conglomérats bitumineux utilisés pour les revêtements routiers sont principalement des mélanges de matériaux inertes et de bitume, également nommées conglomérats asphaltiques ou agglomérés.

Par exemple, dans le cas de conglomérats bitumineux de type "drainant" ou "antiskid", les matériaux inertes sont des mélanges de pierraille basaltique, de sable et de remplissage calcaire ("filler").

Le bitume qui lie lesdits matériaux inertes, est un mélange d'hydrocarbures à masse moléculaire élevée modifiée de façon à présenter une haute viscosité.

Les conglomérats bitumineux pour revêtements routiers ont été l'objet de différentes études tendant à améliorer leur résistance aux efforts appliqués, aux diverses conditions atmosphériques et climatiques, comme leur perméabilité ou leur capacité drainante. Ceci dans le but d'augmenter la sécurité des automobilistes et pour réduire les coûts de manutention.

On a essayé, en particulier, d'augmenter la qualité de ces conglomérats bitumineux en introduisant dans ces derniers différentes fibres.

Les fibres ont potentiellement la capacité d'améliorer la résistance des conglomérats au moins à la fissuration et à la propagation des fissures, dans la mesure où elles peuvent former une sorte de micro-armature qui s'étend à travers le bitume.

On a utilisé plus particulièrement des fibres de cellulose ou végétales en général, fibres de laine, fibre de roche ou laine de verre, et des mélanges de ces dernières.

Ces expériences, pour diverses raisons, n'ont pas donné de résultats satisfaisants, même si elles ont apporté certains avantages.

Par exemple, les fibres végétales ou de cellulose sont des matériaux naturels, mais quand elles absorbent l'eau elles se dégradent et entraînent une perte de cohésion entre les granules des conglomérats.

En pratique, ce phénomène se traduit par une importante perte de la résistance mécanique des conglomérats au cours de leur vieillissement, du fait que l'absorption d'eau se fait graduellement dans le temps.

Les fibres de laine de verre ont un diamètre compris sensiblement entre moins de un et environ trois millièmes de millimètres et ont une longueur très variable. Les fibres de laine de roche ont les mêmes dimensions, elles sont obtenues par fusion de roches principalement sédimentaires et ont la particularité d'être très fragiles.

Dans l'ensemble, elles ne subissent aucun dommage dû à la présence d'humidité, mais leurs dimensions, particulièrement en cas de fragmentation, peuvent constituer un danger pour les personnes et pour l'environnement.

En effet, au fur et à mesure que l'asphalte se détériore, ces fibres, et surtout leurs fragments, se répandent en partie dans l'air et peuvent entrer en contact avec les personnes, et même être respirées, provoquant diverses irritations.

Un autre inconvénient de ces fibres est leur tendance à ne pas se répandre de manière uniforme dans les conglomérats bitumineux, mais plutôt à rester dans les couches sensiblement superficielles de ces derniers.

Un autre inconvénient de la technique actuelle est enfin le coût total que requiert l'ajout de ces fibres. Elles ont, en effet, un coût de l'ordre de quelques milliers de lires par kilogramme de fibres.

Si l'on considère que les quantités utilisés sont de plusieurs kilogrammes de fibres pour chaque tonne de conglomérat bitumineux, et qu'un seul mètre cube de conglomérat bitumineux a un poids d'environ trois tonnes, on comprend que la réalisation d'un revêtement routier comme celui d'une autoroute entraîne une dépense considérable du fait de ces fibres.

En résumé, il reste non résolu le problème technique du renforcement des conglomérats bitumineux pour revêtements routiers par des fibres résistantes stables et fiables dans le temps, mélangeables de façon correcte avec les conglomérats, non dangereuses pour la santé et d'un coût relativement réduit.

1 EP0333299 décrit un procédé de préparation d'une composition destinée à la construction des chaussées, qui contient des fibres de verre d'une longeur entre 5 et 50 mm et un diamètre d'au moins 1 micromètre.

La présente invention a pour objectif technique de concevoir un matériau fibreux de renforcement et un procédé d'obtention aptes à résoudre ledit problème technique et à remédier substantiellement aux inconvénients cités ci-dessus.

Cet objectif technique est en grande partie atteint grâce à un matériau fibreux de renforcement pour conglomérats bitumineux utilisés pour les revêtements routiers, caractérisé en ce qu'il est obtenu majoritairement à partir de filaments de verre présentant un diamètre supérieur ou égal à cinq micromètres et une longueur supérieure ou égale à six millimètres.

Suivant des caractéristiques avantageuses :
- le matériau est sous forme de flocons
- lesdits filaments sont en verre de type "E" constitué essentiellement par un borosilicate de calcium et d'aluminium à faible teneur en alcalins.
- le matériau comprend un mélange de filaments de verre de diamètres différents.
- le matériau comprend des filaments de verre de deux diamètres différents en quantités sensiblement égales en poids.
- lesdits filaments de verre sont issus de fils de verre coupés.
- lesdits filaments ont un diamètre minimal supérieur ou égal à cinq micromètres et un diamètre maximal inférieur ou égal à vingt-quatre micromètres.
- lesdits filaments ont un diamètre moyen compris entre dix et quinze micromètres.
- lesdits filaments présentent principalement une dite longueur minimale supérieure ou égale à six millimètres à une longueur maximale inférieure ou égale à vingt millimètres.
- lesdits filaments (2) présentent une longueur moyenne comprise entre dix et douze millimètres.

L'invention a également pour objet un procédé de fabrication d'un matériau fibreux de renforcement pour conglomérats bitumineux utilisés pour Les revêtements routiers, caractérisé en ce qu'il comprend : une phase de sélection dans laquelle on choisit des fils de verre constitués de filaments ayant un diamètre supérieur ou égal à un diamètre minimal de cinq micromètres et inférieur ou égal à un diamètre maximal de vingt-quatre micromètres ; et une phase de broyage durant laquelle lesdits fils sont coupés en filaments ayant en majorité une longueur supérieure ou égale à six millimètres.

Suivant des caractéristiques avantageuses :
- dans ladite phase de broyage, les filaments coupés s'agglomèrent sous forme de flocons.
- dans ladite phase de sélection, lesdits fils de verre sont choisis parmi des rebuts et des déchets de production.
- dans ladite phase de sélection, on choisit les fils en verre de qualité "E".
- dans ladite phase de sélection, on choisit des fils de verre "TextiLe" et des fils de verre "Roving".
- lesdits fils sont dosés en quantités sensiblement égales en poids.
- on sélectionne des fils de diamètres différents, choisis de façon à obtenir un diamètre moyen compris entre dix et quinze micromètres.
- durant la phase de broyage, lesdits fils sont coupés en filaments d'une longueur moyenne comprise entre dix et douze millimètres.
- la phase de broyage est réalisée avec un coupeur à lames tournantes.

L'invention a en outre pour objet l'utilisation d'un matériau fibreux réalisé comme ci-dessus, suivant laquelle ledit matériau fibreux est introduit comme matériau de renforcement dans des conglomérats bitumineux pour revêtements routiers.

L'invention a enfin pour objet un conglomérat bitumineux pour revêtements routiers, du type comprenant du bitume et un mélange de matériaux inertes. caractérisé en ce qu'il contient un matériau fibreux de renforcement selon l'invention.

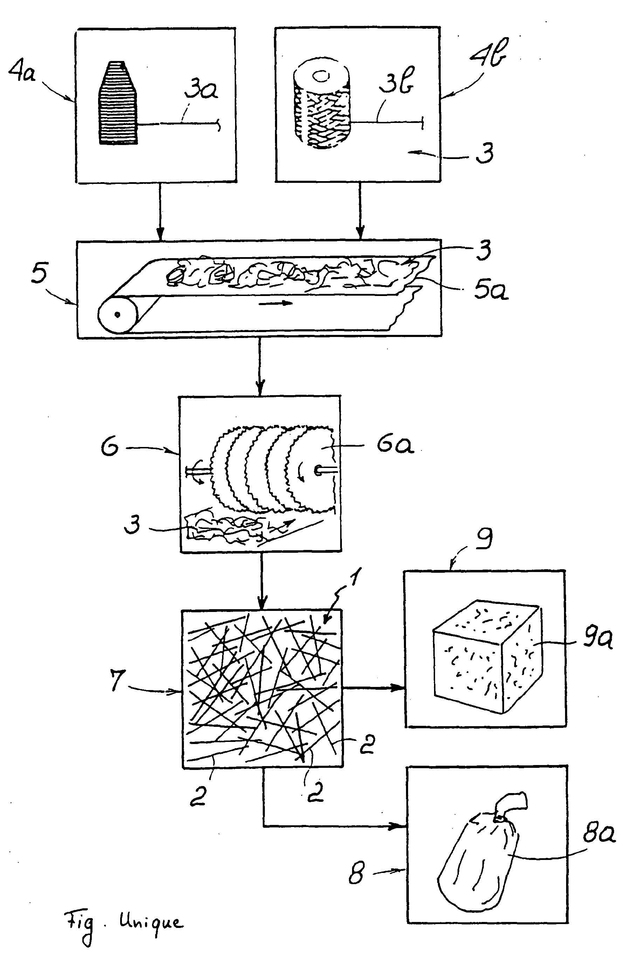

Nous allons maintenant décrire, à titre d'exemple non limitatif, un mode de réalisation préféré de l'invention, illustré dans le dessin annexé, et dans lequel la figure unique montre à travers un schéma de flux comment se déroule le procédé original pour la réalisation du matériau fibreux selon l'invention.

En se référant au dessin, la fibre de renforcement pour conglomérats bitumineux utilisés en revêtements routiers est globalement indiquée par le repère 1.

Elle est réalisée de façon originale par des filaments 2 en verre qui sont en essentiellement des morceaux de fils 3 de verre, notamment de fils coupés ou broyés, constitués de filaments d'un diamètre supérieur à cinq micromètres (millièmes de millimètre) et d'une longueur supérieure à six millimètres.

Selon cet exemple, les filaments 2 sont tous en verre de type "E". Il est connu que le verre de type "E" a d'excellentes qualités de résistance et un haut module d'élasticité, ainsi qu'un point de fusion élevé.

En bref, il peut être défini comme un borosilicate de calcium et d'aluminium qui se caractérise par un très faible taux d'alcalins.

De façon plus détaillée, la composition précise du verre "E" utilisé pour les filaments 2 est la suivante :
- Silicium (SiO₂) : 52 - 56 % en poids ;
- Carbonate de calcium (CaO) : 16-25 % en poids ;
- Alumine (Al₂O₃) : 12 - 16 % en poids ;
- Trioxyde de bore (B₂O₃) : 5 - 10 % en poids ;
- divers (MgO, Na₂O, K₂O, Fe₂O₃, T1O₂, ZrO₂, SrO, SO₃, CrO, FeO) : complément à 100.

En ce qui concerne les dimensions, les filaments 2 ont des diamètres sensiblement constants et compris entre ledit diamètre minimal supérieur ou égal à cinq micromètres et un diamètre maximal inférieur ou égal à vingt-quatre micromètres.

En outre, les diamètres et la répartition des filaments sont choisis de préférence de façon à ce que ces derniers aient un diamètre moyen compris entre dix et quinze micromètres.

Selon un autre aspect avantageux de l'invention, la fibre 1 est un mélange de filaments 2 de diamètres différents.

En particulier, la fibre 1 est un mélange de morceaux de deux fils de verre 3 de diamètres différents. et donc de flexibilité différente, mélangés en quantités égales, en poids :
- 50% de fil nommé "Textile" 3a, réalisé en verre "E" d'un diamètre inférieur à dix micromètres (le fil "Textile" 3a est relativement fin de façon à obtenir la flexibilité maximale quand il est utilisé dans des articles textiles), et
- 50% de fil nommé "Roving" 3b, réalisé en verre "E" d'un diamètre supérieur à quatorze micromètres, (le fil "Roving" 3b a une section supérieure afin d'obtenir une résistance élevée quand il est utilisé pour créer des enroulements tubulaires).

Dans le cas de filaments 2 réalisés avec des morceaux d'un seul fil de verre 3, ledit diamètre moyen est le diamètre préféré.

Comme précisé ci-après, un diamètre supérieur à cinq micromètres est choisi pour éviter la volatilité des filaments. Un diamètre moyen compris entre dix et quinze micromètres est avantageux pour obtenir deux résultats : un bon compromis entre flexibilité et résistance ; et une bonne dispersion dans le conglomérat.

En effet, quand une fibre de renforcement est introduite dans le conglomérat bitumineux, elle peut tendre à flotter si elle est trop fine ou bien au contraire, à descendre dans le fond, si elle trop épaisse.

Des dimensions comme celles dudit diamètre moyen réalisent un excellent équilibre entre lesdits extrêmes.

Dans le cas préféré de la fibre de renforcement 1 définie par un mélange de filaments 2 provenant en parties égales d'un fil de verre "Textile" 3a et d'un fil de verre "Roving" 3b, de différents diamètres, on obtient de façon originale la certitude d'une dispersion rapide des filaments 2 à tous les niveaux du bitume et du conglomérat bitumineux.

En ce qui concerne la longueur, les filaments 2 ont sensiblement une longueur minimale supérieure ou égale à six millimètres et une longueur maximale inférieure ou égale à vingt millimètres.

Les filaments 2 ont de préférence une longueur moyenne comprise entre dix et douze millimètres.

Cette longueur moyenne est particulièrement avantageuse.

En effet, on a démontré de façon expérimentale que les faibles longueurs augmentent la volatilité des filaments et donnent lieu a une faible cohésion du conglomérat bitumineux. En d'autres termes, on réduit la fonction de renforcement ou de liant pour laquelle la fibre existe.

En revanche, des longueurs excessives entraînent soit une rupture possible des filaments, soit une difficulté sensible à réaliser le mélange ou la dispersion des fibres à l'intérieur du conglomérat bitumineux.

Au contraire, une fibre (ou matériau) de renforcement 1 comprenant des filaments de ladite longueur moyenne ou en tout cas d'une longueur comprise entre le minimum et le maximum indiqués, donne d'excellents résultats en aptitude à la cohésion, en facilité de dispersion, en intégrité.

Les dimensions indiquées ci-dessus sont en outre avantageuses en ce qu'elles permettent aux filaments de s'agglomérer ou de s'enchevêtrer en flocons qui montrent une bonne dispersion dans un mélange bitumineux.

On précise que, alors qu'il est possible de choisir précisément les diamètres des filaments, pour les longueurs il existe toujours une certaine quantité de fragments de dimensions non prévisibles.

L'invention comprend en outre un nouveau procédé pour réaliser la fibre de renforcement décrite ci-dessus.

Selon le nouveau procédé, il est envisagé de facon originale que le matériau fibreux de renforcement soit réalisé à partir de fils de verre déjà produits et de préférence à partir de rebuts ou de déchets de production, quand ces déchets ne sont pas dus à des aspects qualitativement essentiels des fils.

De façon avantageuse, le matériau de renforcement 1 est de plus réalisé a partir d'un mélange de plusieurs fils de verre de diamètres et de consistance différents, fils qui sont contrôlés du point de vue de leur qualité et dimensions et qui sont dépourvus de tout corps étranger.

En particulier, il est avantageux de partir d'un mélange dudit fil "Textile" 3a et dudit fil "Roving" 3b.

Les premières phases du procédé illustrées dans la figure sont précisément des phases de sélection 4a, 4b respectivement du fil "Textile" 3a et du fil "Roving" 3b.

La phase suivante du procédé consiste ensuite en une phase de mélange 5 des fils sélectionnés qui sont insérés sur un ruban transporteur 5a, indiqué sur le schéma, ou qui sont transportés vers les phases de transformation successives. Dans le cas de fils 3a, 3b, le mélange peut être fait simplement en pourcentages égaux. Dans le cas d'utilisation d'autres types de fils, il faut choisir et doser les quantités de façon que, dans la phase de mélange, le diamètre moyen des fils soit compris entre dix et quinze micromètres, ou soit voisin de la valeur optimale.

En tout cas, il est avantageux de sélectionner et de mélanger seulement des fils 3 de verre de qualité "E" de diamètres supérieurs à un diamètre minimal de cinq micromètres et inférieurs à un diamètre maximal de vingt-quatre micromètres.

Les fils, même de longueur plus élevée, sont ensuite réduits en morceaux ou filaments 2 de longueur au moins en majorité supérieure à une longueur minimale de six millimètres et inférieure à une longueur maximale de vingt millimètres.

Cette opération est réalisée dans la phase de broyage 6, durant laquelle les fils 3a, 3b sont coupés dans un coupeur à lames tournantes 6a. schématiquement représenté par quelques lames, ou dans tout autre appareil approprié.

De préférence, le broyage est réalisé de manière à obtenir des bouts ou des filaments 2 d'une longueur moyenne comprise entre dix et douze millimètres.

Le broyage des fils a pour conséquence l'agglomération ou l'enchevêtrement des filaments coupés 2 sous forme de flocons.

A la phase de broyage 6 peuvent être associées diverses autres opérations.

Par exemple, une fragmentation initiale des fils, s'ils sont recueillis en masse compacte ou s'ils sont de longueurs particulièrement élevées, afin de faciliter la phase de broyage suivante.

Il est aussi opportun de procéder à une phase de criblage à travers une grille à trous calibres qui permet d'obtenir une uniformité de coupe.

Après la phase de broyage 6, le matériau fibreux 1 est pratiquement réalisé, comme montré schématiquement dans la case 7 où le repère 2 indique les filaments ainsi réalisés. Le matériau 1 peut être stocké en silo ou emmagasiné de toute autre façon appropriée.

Avant le stockage, il est opportun de procéder à une phase supplémentaire de déferrisation de la fibre afin d'éliminer les particules de fer qui auraient pu s'introduire durant les phases de fabrication décrites ci-dessus, en particulier au cours du broyage.

Enfin, la figure montre une phase d'emballage 8, durant laquelle la fibre de renforcement 1 est introduite par exemple dans des sachets 8a thermofusibles.

Il est également envisagé que l'emballage se fasse, comme le montre la case 9, en balles 9a de grande taille obtenues grâce à des presses ou à d'autres dispositifs.

L'emballage peut être également effectué juste après le broyage ou avant le stockage.

Comme déjà précisé, l'utilisation de la fibre 1 prévoit son insertion comme matériau de renforcement dans des conglomérats bitumineux pour revêtements routiers.

Ces conglomérats sont essentiellement un mélange de matériaux inertes et de bitume.

Par exemple, dans le cas de conglomérats bitumineux de type "drainant" ou "antiskid", les matériaux inertes sont des mélanges de pierraille basaltique. de sable et d'un remplissage "filler", alors que le bitume est de type modifié à viscosité élevée.

Dans le détail, une composition optimale d'un conglomérat "antiskid" est la suivante :
- Matériau inerte : 77% de pierraille basaltique; 14% de sable, 9% de remplissage calcaire.
- Bitume modifié à viscosité élevée : à peine 5,5% du poids du matériau inerte ci-dessus.

Dans ce conglomérat, la fibre 1 est introduite en quantité comprise entre deux et cinq pour cent du poids total du matériau inerte.

L'invention présente des avantages importants.

En effet, en premier lieu, la fibre obtenue, compte tenu de ses dimensions, de sa résistance et de sa flexibilité, et étant donné que c'est un matériau neutre tel que le verre, elle n'est pas dangereuse pour la santé, elle ne peut pas être inhalée et elle peut être éliminée comme déchet non dangereux.

En second lieu, la fibre forme une armature fixe ou réseau tridimensionnel à l'intérieur du conglomérat avec pour effet l'accroissement du volume occupé par le bitume et l'amélioration notable de la résistance à la fissuration et à la rupture, ainsi que de l'absorption des efforts tangentiels sous des charges dynamiques.

Ces caractéristiques ne varient pas dans le temps et le verre se révèle insensible à la présence d'eau.

Le procédé permet en outre de réaliser ces fibres à des coûts inférieurs à ceux des fibres connues citées dans notre introduction, en particulier parce que la matière première peut être obtenue à partir des rebuts ou des déchets de production.

La fiabilité, l'efficacité mécanique et les coûts réduits ont globalement comme conséquence la possibilité de réduire la fréquence de réfection des revêtements routiers, ou de réaliser des couches efficaces d'épaisseur réduite, ou encore d'augmenter les surfaces de revêtement sans augmenter les coûts totaux.

La fibre de renforcement selon l'invention garantit également une répartition uniforme des fibres à l'intérieur du conglomérat, grâce à ses dimensions optimales définies par lesdits diamètre moyen et longueur moyenne qui la mettent en équilibre dans le bitume.

De plus, dans le cas préféré d'une fibre constituée par un mélange de filaments de diamètres différents, on obtient aussi dans le domaine indiqué un mélange rapide et une dispersion de la fibre : les divers filaments se répartissent spontanément et rapidement tous les niveaux du conglomérat.

La longueur moyenne choisie donne ensuite d'excellents résultats en ce qui concerne la capacité de cohésion et l'intégrité : elle lie de vastes portions de conglomérat et elle ne donne pas lieu aux fragmentations des filaments.

Entre autre, le réseau sensiblement homogène formé par les fibres empêche le bitume de couler du conglomérat jusqu'au fond des caissons des camions, évitant ainsi une perte de ce bitume et une modification de la composition optimale du conglomérat.

L'invention décrite ci-dessus dans son mode de réalisation préféré est susceptible de nombreuses modifications et variantes qui rentrent toutes dans le cadre du concept inventif.

En outre, tous les détails peuvent être remplacés par des éléments techniquement équivalents.

## Revendications

1. Matériau fibreux de renforcement pour conglomérats bitumineux utilisés pour les revêtements routiers, **caractérisé en ce qu'**il est obtenu majoritairement à partir de filaments (2) de verre présentant un diamètre supérieur ou égal à cinq micromètres et une longueur supérieure ou égale à six millimètres et **en ce qu'**il comprend un mélange de filaments (2) de verre de diamètres différent, arrangés sous forme de flocons (1).

2. Matériau fibreux de renforcement selon la revendication 1, selon lequel lesdits filaments (2) sont en verre de type "E" constitué essentiellement par un borosilicate de calcium et d'aluminium à faible teneur en alcalins.

3. Matériau fibreux de renforcement selon la revendication 1 ou 2, comprenant des filaments (2) de verre de deux diamètres différents en quantités sensiblement égales en poids.

4. Matériau fibreux de renforcement selon une ou plusieurs des revendications précédentes, dans lequel lesdits filaments (2) de verre sont issus de fils de verre (3) coupés.

5. Matériau fibreux de renforcement selon une ou plus des revendications précédentes, dans lequel lesdits filaments (2) ont un diamètre minimal supérieur ou égal à cinq micromètres et un diamètre maximal inférieur ou égal à vingt-quatre micromètres.

6. Matériau fibreux de renforcement selon la revendication 5, dans lequel lesdits filaments (2) ont un diamètre moyen compris entre dix et quinze micromètres.

7. Matériau fibreux de renforcement selon une ou plusieurs des revendications précédentes, dans lequel lesdits filaments (2) présentent principalement une dite longueur minimale supérieure ou égale à six millimètres à une longueur maximale inférieure ou égale à vingt millimètres.

8. Matériau fibreux de renforcement selon la revendication 7, dans lequel lesdits filaments (2) présentent une longueur moyenne comprise entre dix et douze millimètres.

9. Procédé de fabrication d'un matériau fibreux de renforcement pour conglomérats bitumineux utilisés pour les revêtements routiers, **caractérisé en ce qu'**il comprend : une phase de sélection (4) dans laquelle on choisit des fils (3) de verre constitués de filaments (2) ayant un diamètre supérieur ou égal à un diamètre minimal de cinq micromètres et inférieur ou égal à un diamètre maximal de vingt-quatre micromètres, et on forme un mélange de filaments (2) de verre de diamètres différents ; et une phase de broyage (6) durant laquelle lesdits fils sont coupés en filaments (2) ayant en majorité une longueur supérieure ou égale à six millimètres et dans laquelle les filaments (2) coupés s'agglomèrent sous forme de flocons (1).

10. Procédé selon la revendication 9, selon lequel, dans ladite phase de sélection (4), lesdits fils (3) de verre sont choisis parmi des rebuts et des déchets de production.

11. Procédé selon la revendication 9 ou 10, selon lequel, dans ladite phase de sélection, on choisit les fils (3) en verre de qualité "E".

12. Procédé selon une ou plusieurs des revendications 9 à 11, selon lequel, dans ladite phase de sélection, on choisit des fils de verre "Textile" (3a) et des fils de verre "Roving" (3b).

13. Procédé selon la revendication 12, selon lequel lesdits fils (3a,3b) sont dosés en quantités sensiblement égales en poids.

14. Procédé selon une ou plusieurs des revendications 9 à 13, selon lequel on sélectionne des fils (3) de diamètres différents, choisis de façon à obtenir un diamètre moyen compris entre dix et quinze micromètres.

15. Procédé selon une ou plusieurs des revendications 9 à 14, selon lequel, durant la phase de voyage (6), lesdits fils (3) sont coupés en filaments (2) d'une longueur moyenne comprise entre dix et douze millimètres.

16. Procédé selon une ou plusieurs des revendications 9 à 15, selon lequel ta phase de broyage (6) est réalisée avec un coupeur à lames tournantes (6a).

17. Utilisation d'un matériau fibreux selon une ou plusieurs des revendications 1 à 8 ou réalisé selon une ou plusieurs des revendications 9 à 16, **caractérisée en ce que** ledit matériau fibreux (1) est introduit comme matériau de renforcement dans des conglomérats bitumineux pour revêtements routiers.

18. Conglomérat bitumineux pour revêtements routiers, du type comprenant du bitume et un mélange de matériaux inertes, **caractérisé en ce qu'**il contient un matériau fibreux (1) de renforcement selon une ou plusieurs des revendications 1 à 8 ou réalisé selon une ou plusieurs des revendications 9 à 16.

## Claims

1. Fibrous reinforcing material for bituminous mixes used for road pavements, **characterized in that** it is obtained mostly from glass filaments (2) having a diameter of greater than or equal to five micrometres and a length of greater than or equal to six millimetres and **in that** it comprises a mixture of glass filaments (2) of different diameters, arranged in the form of flakes (1).

2. Fibrous reinforcing material according to Claim 1, in which said filaments (2) are made of E-type glass consisting essentially of calcium aluminium borosilicate with a low alkali content.

3. Fibrous reinforcing material according to Claim 1 or 2, comprising glass filaments (2) of two different diameters in approximately equal quantities by weight.

4. Fibrous reinforcing material according to one or more of the preceding claims, in which said glass filaments (2) come from chopped glass strands (3).

5. Fibrous reinforcing material according to one or more of the preceding claims, in which said glass filaments (2) have a minimum diameter of greater than or equal to five micrometres and a maximum diameter of less than or equal to twenty-four micrometres.

6. Fibrous reinforcing material according to Claim 5, in which said filaments (2) have a mean diameter of between ten and fifteen micrometres.

7. Fibrous reinforcing material according to one or more of the preceding claims, in which said filaments (2) have mainly a so-called minimum length of greater than or equal to six millimetres and a maximum length of less than or equal to twenty millimetres.

8. Fibrous reinforcing material according to Claim 7, in which said filaments (2) have a mean length of between ten and twelve millimetres.

9. Process for manufacturing a fibrous reinforcing material for bituminous mixes used for road pavements, **characterized in that** it comprises: a selection step (4) in which glass strands (3) consisting of filaments (2) having a diameter greater than or equal to a minimum diameter of five micrometres and less than or equal to a maximum diameter of twenty-four micrometres are chosen and a mixture of glass filaments (2) of different diameters is formed; and a milling step (6) during which said strands are chopped into filaments (2) having mostly a length of greater than or equal to six millimetres and in which the chopped filaments (2) agglomerate in the form of flakes (1).

10. Process according to Claim 9, in which, in said selection step (4), said glass strands (3) are chosen from production scrap or waste.

11. Process according to Claim 9 or 10, in which, in said selection step, strands (3) made of E-grade glass are chosen.

12. Process according to one or more of Claims 9 to 11, in which, in said selection step, "textile" glass strands (3a) and "roving" glass strands (3b) are chosen.

13. Process according to Claim 12, in which said strands (3a, 3b) are metered in approximately equal quantities by weight.

14. Process according to one or more of Claims 9 to 13, in which strands (3) of different diameters, chosen so as to obtain a mean diameter of between ten and fifteen micrometres, are selected.

15. Process according to one or more of Claims 9 to 14, in which, during the milling step (6), said strands (3) are chopped into filaments (2) having a mean length of between ten and twelve millimetres.

16. Process according to one or more of Claims 9 to 15, in which the milling step (6) is carried out using a chopper (6a) with rotating blades.

17. Use of a fibrous material according to one or more of Claims 1 to 8 or produced according to one or more of Claims 9 to 16, **characterized in that** said fibrous material (1) is incorporated as reinforcing material into bituminous mixes for road pavements.

18. Bituminous mix for road pavements, of the type comprising bitumen and a mixture of inert materials, **characterized in that** it contains a fibrous reinforcing material (1) according to one or more of Claims 1 to 8 or produced according to one or more of Claims 9 to 16.

## Patentansprüche

1. Faserförmiges Verstärkungsmaterial für Bitumenkonglomerate, die für Straßenbeläge verwendet werden, **dadurch gekennzeichnet, dass** es überwiegend aus Glasfasern (2), die einen Durchmesser von größer als oder gleich fünf Mikrometer und eine Länge von größer als oder gleich sechs Millimeter aufweisen, erhalten wird, und dass es ein Gemisch aus Glasfasern (2) mit unterschiedlichem Durchmesser, die zur Form von Flocken (1) angeordnet sind, umfasst.

2. Faserförmiges Verstärkungsmaterial nach Anspruch 1, gemäß welchem die Fasern (2) aus E-Glas bestehen, das im Wesentlichen von einem Calciumaluminiumborosilicat mit niedrigem Alkaligehalt gebildet wird.

3. Faserförmiges Verstärkungsmaterial nach Anspruch 1 oder 2, das Glasfasern (2) mit zwei verschiedenen Durchmessern in im Wesentlichen gleichen Gewichtsmengen umfasst.

4. Faserförmiges Verstärkungsmaterial nach einem oder mehreren der vorhergehenden Ansprüche, in welchem die Glasfasern (2) aus Kurzglasfäden (3) stammen.

5. Faserförmiges Verstärkungsmaterial nach einem oder mehreren der vorhergehenden Ansprüche, in welchem die Fasern (2) einen Mindestdurchmesser von mehr als oder gleich fünf Mikrometer und einen maximalen Durchmesser von kleiner als oder gleich vierundzwanzig Mikrometer besitzen.

6. Faserförmiges Verstärkungsmaterial nach Anspruch 5, in welchem die Fasern (2) einen mittleren Durchmesser von zehn bis fünfzehn Mikrometern besitzen.

7. Faserförmiges Verstärkungsmaterial nach einem oder mehreren der vorhergehenden Ansprüche, in welchem die Fasern (2) hauptsächlich eine Mindestlänge von mehr als oder gleich sechs Millimeter und eine maximale Länge von weniger als oder gleich zwanzig Millimeter aufweisen.

8. Faserförmiges Verstärkungsmaterial nach Anspruch 7, in welchem die Fasern (2) eine mittlere Länge von zehn bis zwölf Millimeter aufweisen.

9. Verfahren zur Herstellung eines faserförmigen Verstärkungsmaterials für Bitumenkonglomerate, die für Straßenbeläge verwendet werden, **dadurch gekennzeichnet, dass** es eine Auswahlstufe (4), in welcher Glasfäden (3), die von Fasern (2) mit einem Durchmesser von größer als oder gleich einem Mindestdurchmesser von fünf Mikrometern und kleiner als oder gleich einem maximalen Durchmesser von vierundzwanzig Mikrometern gebildet sind, ausgewählt werden, und ein Gemisch aus Glasfasern (2) mit unterschiedlichem Durchmesser gebildet wird, und eine Zerkleinerungsstufe (6), in welcher die Fäden zu Fasern (2) mit überwiegend einer Länge von größer als oder gleich sechs Millimeter zerschnitten werden und in welcher die Kurzfasern (2) zur Form von Flocken (1) agglomerieren, umfasst.

10. Verfahren nach Anspruch 9, gemäß welchem in der Auswahlstufe (4) die Glasfäden (3) aus Produktionsausschuss und -abfällen ausgewählt werden.

11. Verfahren nach Anspruch 9 oder 10, in welchem in der Auswahlstufe die Fäden (3) aus E-Glas ausgewählt werden.

12. Verfahren nach einem oder mehreren der Ansprüche 9 bis 11, gemäß welchem in der Auswahlstufe "Textilglasfäden" (3a) und "Glasrovings" (3b) ausgewählt werden.

13. Verfahren nach Anspruch 12, gemäß welchem die Fäden (3a, 3b) mit im Wesentlichen gleichen Gewichtsmengen dosiert werden.

14. Verfahren nach einem oder mehreren der Ansprüche 9 bis 13, gemäß welchem Fäden (3) mit unterschiedlichem Durchmesser ausgewählt werden, die derart gewählt werden, dass ein mittlerer Durchmesser von zehn bis fünfzehn Mikrometern erhalten wird.

15. Verfahren nach einem oder mehreren der Ansprüche 9 bis 14, gemäß welchem in der Zerkleinerungsstufe (6) die Fäden (3) zu Fasern (2) mit einer mittleren Länge von zehn bis zwölf Millimetern zugeschnitten werden.

16. Verfahren nach einem oder mehreren der Ansprüche 9 bis 15, gemäß welchem die Zerkleinerungsstufe (6) mit einer Schneidmaschine mit sich drehenden Blättern (6a) durchgeführt wird.

17. Verwendung eines Fasermaterials nach einem oder mehreren der Ansprüche 1 bis 8 oder hergestellt nach einem oder mehreren der Ansprüche 9 bis 16, **dadurch gekennzeichnet, dass** das Fasermaterial (1) als Verstärkungsmaterial in Bitumenkonglomerate für Straßenbeläge eingebracht wird.

18. Bitumenkonglomerat für Straßenbeläge von dem Typ, der Bitumen und ein Gemisch aus inerten Materialien umfasst, **dadurch gekennzeichnet, dass** es ein faserförmiges Verstärkungsmaterial (1) nach einem oder mehreren der Ansprüche 1 bis 8 oder hergestellt nach einem oder mehreren der Ansprüche 9 bis 16 enthält.
